# FASCICULE DE BREVET EUROPEEN

(11) **EP 2 705 273 B1**
(45) Date de publication et mention de la délivrance du brevet: **27.03.2019**
(21) Numéro de dépôt: 12722461.6
(22) Date de dépôt: 24.04.2012
(51) Int. Cl.: F16F 15/123, F16F 15/14

(54) **DISPOSITIF D'AMORTISSEMENT DE TORSION COMPORTANT DES MASSELOTTES PENDULAIRES MONTÉES SUR UNE RONDELLE DE PHASAGE**
DREHSCHWINGUNGSDÄMPFER MIT AN EINER PHASENUNTERLEGSCHEIBE MONTIERTEN PENDELARTIGEN FLIEHGEWICHTEN
TORSION DAMPING DEVICE COMPRISING PENDULAR FLYWEIGHTS MOUNTED ON A PHASE WASHER

(30) Priorité: 04.05.2011 FR 1153794
(43) Date de publication de la demande: 12.03.2014
(73) Titulaire: Valeo Embrayages, 80009 Amiens Cedex 2 (FR)
(72) Inventeur: CAILLERET, Franck, 80009 Amiens (FR); RENIER, Lionel, 58600 Garchizy (FR); HERVET, Pascal, 80009 Amiens (FR)
(74) Mandataire: Cardon, Nicolas
(86) Numéro de dépôt international: PCT/FR2012/050893
(87) Numéro de publication internationale: WO 2012/150401

(56) Documents cités:
- DE-A1- 10 005 548
- DE-A1-102010 034 812
- GB-A- 2 189 867
- US-A1- 2010 269 497

## Description

L'invention concerne un dispositif d'amortissement de torsion entre un arbre moteur et un arbre mené coaxiaux d'orientation axiale dans un système d'accouplement temporaire de véhicule automobile comprenant des premiers moyens d'amortissement par des organes élastiques, et des deuxièmes moyens d'amortissement par des masselottes pendulaires.

Le document US 2010/0269497 A1 est considéré comme l'état de la technique le plus proche de l'objet de la revendication 1; il divulgue l'ensemble du préambule de l'objet de la revendication 1.

L'invention concerne plus particulièrement un dispositif d'amortissement de torsion entre un arbre moteur et un arbre mené dans un système d'accouplement temporaire de véhicule automobile, le dispositif étant équipé de premiers moyens d'amortissement de torsion qui comportent :
- un élément d'entrée de couple et un élément de sortie de couple ;
- au moins deux organes élastiques à action circonférentielle qui sont interposés circonférentiellement en série entre l'élément d'entrée et l'élément de sortie ;
- au moins une première rondelle radiale de phasage qui est libre en rotation par rapport à l'élément d'entrée et par rapport à l'élément de sortie, la rondelle de phasage comportant au moins une patte radiale de phasage qui est interposée circonférentiellement entre les deux organes élastiques en série ;
le dispositif d'amortissement étant équipé de deuxièmes moyens d'amortissement de torsion qui comportent :
- au moins deux masselottes pendulaires qui sont montées oscillantes dans un plan radial sur la première rondelle de phasage ;
- au moins un pion axial pour guider chaque masselotte pendulaire, le pion de guidage étant logé en partie dans un orifice de la masselotte pendulaire et en partie dans un orifice de la première rondelle de phasage ;
- l'orifice de la masselotte pendulaire présente un bord radialement intérieur le long duquel le pion de guidage est susceptible de rouler.

Les dispositifs d'amortissement de ce type équipent, par exemple, des installation d'embrayage à friction sec ou humide, ou encore des installation d'embrayage destinées à verrouiller un convertisseur hydrodynamique.

Un moteur à explosion présente des acyclismes du fait de la succession des explosions dans les cylindres du moteur. Les moyens amortisseurs de torsion permettent de filtrer ces acyclismes avant de transmettre le couple moteur à une boîte de vitesses. Il est en effet nécessaire d'amortir les vibrations avant qu'elles ne pénètrent dans la boîte de vitesse et ne provoquent une nuisance sonore inacceptable.

Pour ce faire, il est connu d'interposer un dispositif d'amortissement de torsion entre l'arbre moteur et l'arbre de boîte de vitesses. Le dispositif d'amortissement de torsion est généralement agencé dans un système d'embrayage qui permet la liaison temporaire en rotation de l'arbre moteur avec l'arbre de boîte de vitesses.

Le dispositif d'amortissement de torsion comporte généralement des premiers moyens d'amortissement par interposition d'organes élastiques à action circonférentielle entre un élément d'entrée de couple et un élément de sortie de couple.

De tels premiers moyens d'amortissement sont avantageusement complétés par des deuxièmes moyens d'amortissement par masselottes pendulaires. Ces masselottes pendulaires, encore appelées oscillateurs pendulaires, s'étendent autour de l'axe de rotation de l'arbre moteur et sont libres d'osciller autour d'un axe fictif sensiblement parallèle à l'axe de rotation de l'arbre moteur. Lorsque les masses pendulaires réagissent aux irrégularités de rotation, elles oscillent de manière à ce que le centre de gravité de chacune de ces masses pendulaires oscille autour d'un axe sensiblement parallèle à l'axe de rotation de l'arbre moteur. La position radiale du centre de gravité de chacune des masses pendulaires par rapport à l'axe de rotation de l'arbre moteur ainsi que la distance de ce centre de gravité par rapport à l'axe fictif d'oscillations sont établies de manière à ce que sous l'effet des forces centrifuges, la fréquence d'oscillation de chacune des masses pendulaires soit proportionnelle à la vitesse de rotation de l'arbre moteur, ce multiple pouvant par exemple prendre une valeur proche du rang de l'harmonique prépondérant des vibrations responsables des fortes irrégularités de rotation.

Lors de la conception d'un tel dispositif d'amortissement, le choix de l'élément de support de la masselotte pendulaire est crucial pour obtenir un amortissement optimal des acyclismes.

En outre, les masselottes pendulaires sont des éléments mobiles qui sont soumis à des forces centrifuges de forte intensité, et dont l'intensité est susceptible de varier de manière brusque. On a constaté que dans les dispositifs d'amortissement existants, la masselotte pendulaire n'était pas maintenue de manière stable dans un plan radial. La masselotte a ainsi tendance à basculer latéralement, dans un sens ou dans l'autre autour d'un axe circonférentiel.

Ceci a pour effet de générer des frottements parasités entre les masses et leur support, ce qui change la cinématique de la masselotte et dégrade le fonctionnement du dispositif pendulaire et donc son efficacité de filtrage.

De plus, ceci risque d'endommager le pion de guidage et d'augmenter les jeux de montage.

Par ailleurs, un tel dispositif d'amortissement n'est pas aisé à monter car il est nécessaire de positionner un grand nombre d'éléments avant de procéder à la fixation des différents éléments entre eux.

L'invention propose un dispositif d'amortissement du type décrit précédemment, caractérisé en ce que les masselottes pendulaires sont interposées axialement entre la première rondelle de phasage et une deuxième plaque radiale de support qui est fixe par rapport à la rondelle de phasage, et en ce que les pions de guidage sont logés en partie dans un orifice de la deuxième plaque.

Selon d'autres caractéristiques de l'invention :
- les premiers moyens d'amortissement de torsion comportent une deuxième rondelle radiale de phasage qui est agencée parallèlement à la première rondelle de phasage, la deuxième rondelle de phasage formant ladite deuxième plaque de support ;
- les masselottes pendulaires sont formées par deux plaquettes d'extrémité axiale qui enserrent au moins une plaquette intermédiaire ;
- le bord radialement intérieur de l'orifice de passage des deux plaquettes d'extrémité axiale est décalé radialement vers l'extérieur par rapport au bord radialement intérieur de l'orifice de passage de la plaquette intermédiaire de manière que les pions de guidage soient susceptibles de rouler uniquement sur le bord intérieur de l'orifice des plaquettes d'extrémité sans entrer en contact avec le bord intérieur de l'orifice de passage de la plaquette intermédiaire ;
- les pions de guidage portent une première face de butée et une deuxième face de butée qui sont destinées à venir en contact axial contre des faces de butoir associées qui sont portées par les masselottes pendulaires pour limiter les déplacements axiaux des pions de guidages dans les deux sens par rapport aux masselottes pendulaires ;
- les deux faces de butée sont formées par des faces radiales opposées d'un collet central des pions de guidage, le collet étant agencé entre les deux plaquettes d'extrémité, une face radiale de chaque plaquette d'extrémité formant ladite face de butoir ;
- le collet est réalisé venu de matière en une pièce avec les pions de guidage ;
- le collet est formé par une bague qui est fixée sur les pions de guidage ;
- chaque face de butée est portée par un collet associé du pion de guidage, les deux collets étant agencés axialement de part et d'autre des masselottes pendulaires, chaque collet étant destiné à venir en butée axiale contre une plaquette d'extrémité associée des masselottes pendulaires pour limiter les déplacements axiaux du pion de guidage ;
- au moins l'un des collets est formé par une bague qui est fixé sur le pion de guidage ;
- l'un des collets est réalisé venu de matière avec le pion de guidage ;
- les plaquettes des masselottes pendulaires sont fixées axialement entre elles par des rivets ;
- l'écart axial entre la rondelle de phasage et la plaque de support en vis-à-vis est maintenu constant au moyen d'au moins une entretoise ;
- les deux rondelles de phasage forment des organes de guidage qui sont susceptibles d'emprisonner axialement les organes élastiques.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue de côté qui représente un dispositif d'amortissement réalisé selon un premier mode de réalisation de l'invention ;
- la figure 2 est une vue de face qui représente le dispositif d'amortissement de la figure 1 ;
- la figure 3 est une vue en coupe selon le plan de coupe 3-3 de la figure 2 qui représente notamment des pattes de phasage ;
- la figure 4 est une vue en coupe selon le plan de coupe 4-4 de la figure 2 qui représente notamment une patte d'un élément d'entrée de couple et une patte d'un élément de sortie de couple ;
- la figure 5 est une vue en coupe selon le plan de coupe 5-5 de la figure 2 qui représente notamment une entretoise d'écartement de rondelles de phasage ;
- la figure 6 est une vue en section à plus grande échelle selon le plan de coupe 6-6 de la figure 2 qui représente un pion de guidage d'une masselotte pendulaire ;
- la figure 7 est une vue similaire à celle de la figure 6 qui représente une variante de réalisation du premier mode de réalisation de l'invention ;
- la figure 8 est une vue similaire à celle de la figure 3 qui représente un dispositif d'amortissement de torsion réalisé selon un deuxième mode de réalisation de l'invention.

Pour la suite de la description, on adoptera des orientations :
- axiale dirigée d'arrière en avant selon l'axe de rotation du dispositif d'amortissement, et indiquée par la flèche "A" des figures,
- radiale dirigée orthogonalement à l'axe du dispositif d'amortissement de l'intérieur vers l'extérieur en s'éloignant dudit axe ;
- circonférentielle dirigée orthogonalement à l'axe du dispositif d'amortissement et orthogonalement à la direction radiale.

Pour la suite de la description, des éléments présentant des fonctions similaires, identiques ou analogues seront désignés par des mêmes numéros de référence.

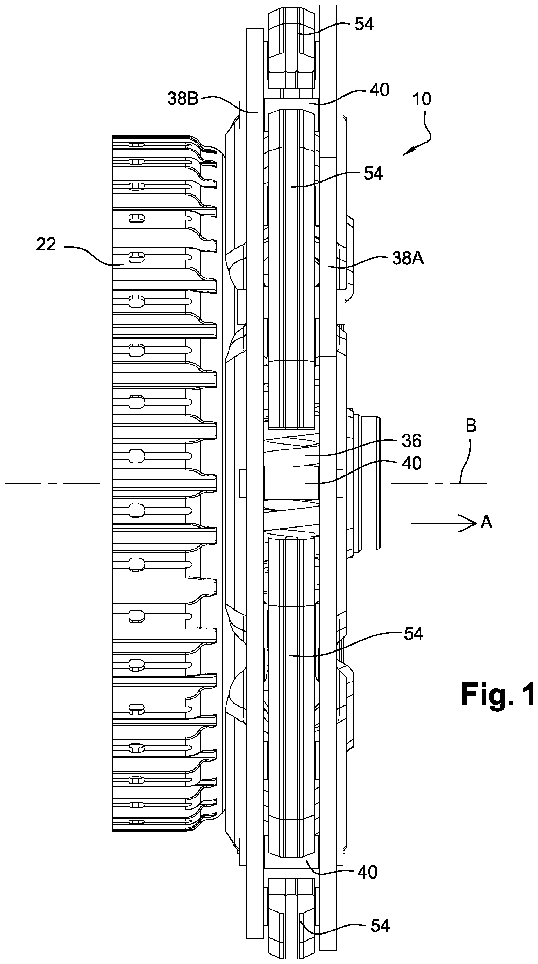

On a représenté à la figure 1 un dispositif 10 d'amortissement de torsion réalisé selon un premier mode de réalisation de l'invention. Le dispositif 10 d'amortissement est destiné à être agencé dans un système d'accouplage temporaire de véhicule automobile. Le dispositif 10 d'amortissement est ici destiné à être agencé dans un convertisseur de couple (non représenté) pour pour amortir les torsions de l'accouplage entre le carter du convertisseur de couple et l'arbre d'entrée d'une boîte automatique de vitesses.

Le dispositif 10 d'amortissement de torsion réalisé selon les enseignements de l'invention est aussi applicable à tout autre type de systèmes d'embrayage.

Le dispositif 10 d'amortissement de torsion permet d'amortir les tensions entre un premier arbre (non représenté) moteur et un deuxième arbre (non représenté) mené coaxiaux d'axe "B".

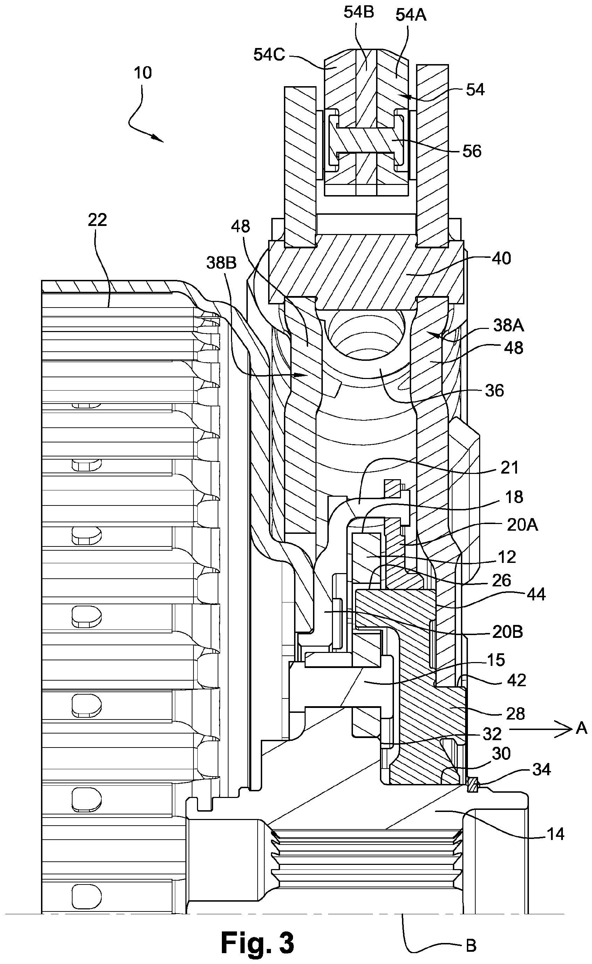

Comme représenté à la figure 3, le dispositif 10 comporte un élément de sortie de couple qui est ici formé par un voile 12 radial de sortie. Le voile 12 de sortie présente une forme de rondelle circulaire coaxiale à l'axe "B".

Le voile 12 de sortie est destiné à être lié en rotation au deuxième arbre mené par l'intermédiaire d'un moyeu mené 14. Le voile 12 de sortie est lié en rotation avec le moyeu mené 14 par l'intermédiaire de rivets 15.

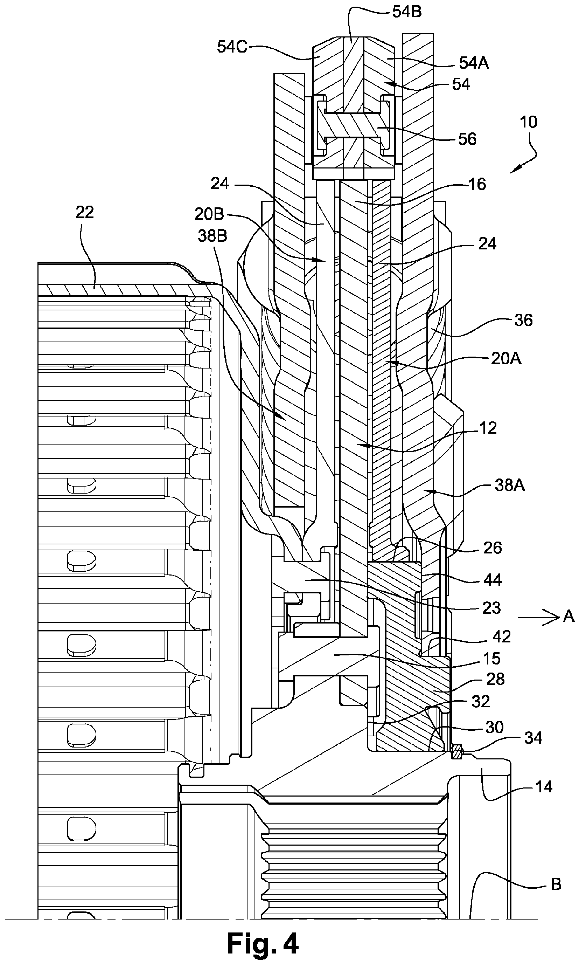

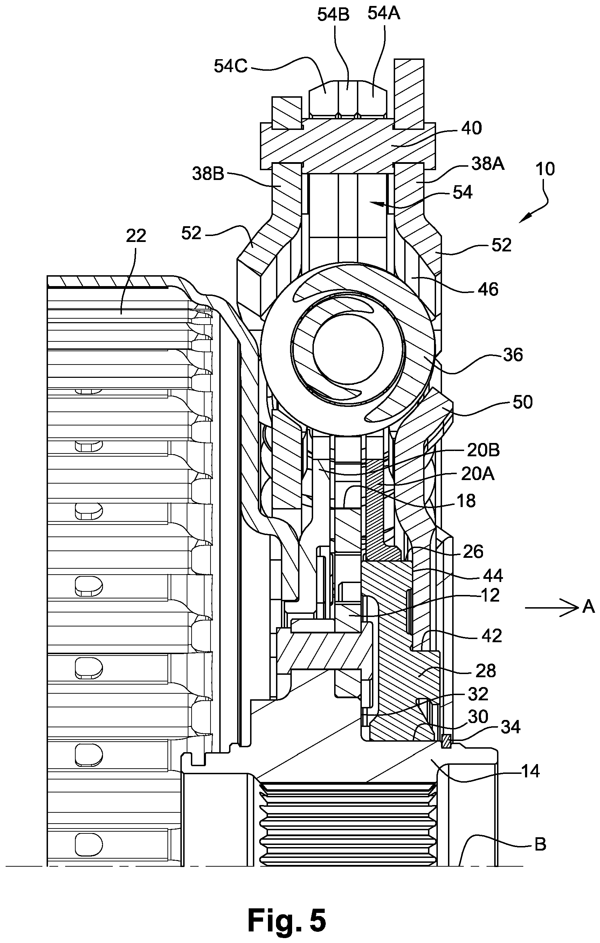

Le voile 12 de sortie présente trois pattes 16 radiales dont une est visible à la figure 4. Les pattes 16 sont agencées régulièrement autour de l'axe "B" globalement à 120° les unes des autres. Chaque patte 16 s'étend radialement en saillie par rapport au bord périphérique extérieur 18 du voile 12 de sortie. Le bord périphérique extérieur 18 est visible aux figures 3 et 5.

Comme représenté aux figures 3 à 5, le dispositif 10 d'amortissement présente en outre un élément d'entrée de couple qui est ici formé par une première rondelle radiale d'entrée 20A avant et par une deuxième rondelle radiale d'entrée 20B arrière. Les rondelles d'entrée 20A, 20B sont parallèles entre elles et elles sont agencées axialement de part et d'autre du voile 12 de sortie.

La rondelle d'entrée 20B arrière est liée en rotation avec la rondelle d'entrée 20A avant par l'intermédiaire de bras axiaux 21, comme cela est représenté à la figure 3.

Les deux rondelles d'entrée 20A, 20B sont liées en rotation au premier arbre moteur par l'intermédiaire d'un moyeu 22 cannelé sur lequel est monté mobile axialement un piston de lock-up, non représenté. Le piston de lock-up est mobile entre une position dépontée et une position de pontage du convertisseur permettant d'accoupler le carter du convertisseur de couple à l'arbre d'entrée de la boîte automatique.

Le moyeu moteur 22 est agencé à l'arrière du dispositif 10 d'amortissement. La rondelle d'entrée 20B arrière est fixée au moyeu moteur 22 par l'intermédiaire de rivets 23 dont un est représenté à la figure 4.

Chaque rondelle d'entrée 20A, 20B présente un flasque radial qui est pourvu d'un passage central pour permettre le passage de l'arbre mené et du moyeu mené 14 du voile 12 de sortie.

Chaque rondelle d'entrée 20A, 20B comporte en outre trois pattes 24 extérieures de poussée qui sont agencées en coïncidence avec les pattes 16 du voile 12 de sortie. L'une des pattes 24 de poussée est représentée à la figure 4.

Lorsque les deux rondelles d'entrée 20A, 20B sont assemblées, leurs flasques sont écartés d'une distance axiale suffisante pour permettre au voile 12 de sortie de tourner sans frottement entre les deux rondelles d'entrée 20A, 20B.

La rondelle d'entrée 20A avant est montée tournante librement sur une première face cylindrique extérieure 26 de guidage d'un palier 28 central. Le palier 28 est lui-même monté tournant sur une face cylindrique extérieure 30 d'un tronçon avant du moyeu mené 14 du voile 12 de sortie. Les déplacements axiaux du palier 28 sont limités vers l'arrière par une face d'épaulement 32 du moyeu mené 14, tandis qu'ils sont limités axialement vers l'avant par un anneau élastique 34 qui est monté sur le moyeu mené 14.

Le dispositif 10 d'amortissement comporte en outre des organes élastiques 36 à action circonférentielle. De manière non limitative, le dispositif 10 d'amortissement comporte ici six organes élastiques 36. Les organes élastiques 36 sont ici formés par des ressorts hélicoïdaux d'axe principal d'orientation circonférentielle.

Les organes élastiques 36 sont agencés en une rangée circulaire autour du bord périphérique 18 du voile 12.

Les organes élastiques 36 sont répartis en trois groupes de deux organes élastiques 36. Les organes élastiques 36 de chaque groupe sont logés circonférentiellement en série, c'est-à-dire bout à bout, entre deux pattes 16 du voile 12 de sortie. Dans le mode de réalisation, les organes élastiques 36 étendent tous à une même distance radiale.

Les deux organes élastiques 36 de chaque groupe étant montés en série, les deux extrémités en vis-à-vis de ces deux organes élastiques 36 sont susceptibles de prendre appui l'une sur l'autre lors de la transmission d'un couple entre les rondelles d'entrée 20A, 20B et le voile 12 de sortie.

Pour que les organes élastiques 36 soient sollicités sensiblement selon leur axe principal circonférentiel, il est connu d'équiper le dispositif 10 d'amortissement avec un organe de phasage.

Un tel organe de phasage est ici formé d'une première rondelle radiale de phasage 38A avant et d'une deuxième rondelle de phasage 38B arrière. La deuxième rondelle radiale de phasage 38B est agencée parallèlement à la première rondelle de phasage 38A. Les rondelles de phasage 38A, 38B sont agencées axialement de part et d'autre des rondelles d'entrée 20A, 20B et des organes élastiques 36.

Comme illustré aux figures 3 et 5, la rondelle de phasage 38B arrière est fixée à la rondelle de phasage 38A avant par l'intermédiaire d'entretoises 40 d'axe axial. Chaque extrémité de l'entretoise 40 est fixée à une rondelle de phasage 38A, 38B associée, ici par déformation de ladite extrémité, à la manière d'un rivet.

Les entretoises 40 permettent de maintenir les deux rondelles de phasage 38A, 38B écartées axialement d'une distance constante. Lorsque les deux rondelles de phasage 38A, 38B sont assemblées, leurs flasques sont écartés d'une distance suffisante pour permettre aux rondelles d'entrée 20A, 20B de tourner sans frottement. De plus, la distance entre les deux rondelles de phasage 38A, 38B est également déterminée en fonction de l'épaisseur des masselottes pendulaires 54.

La distance d'écartement axial entre les deux rondelles de phasage 38A, 38B est inférieure au diamètre des organes élastiques 36.

Les rondelles de phasage 38A, 38B sont montées libres en rotation par rapport au voile 12 de sortie, d'une part, et par rapport aux rondelles d'entrée 20A, 20B, d'autre part.

La rondelle de phasage 38A avant est montée tournante librement sur une deuxième face cylindrique de guidage 42 du palier 28. La deuxième face cylindrique de guidage 42 est agencée axialement en avant de la première face cylindrique de guidage 26. La deuxième face cylindrique de guidage 42 présente un diamètre inférieur à celui de la première face cylindrique de guidage 26 du palier 28. Une face radiale d'épaulement 44 tournée vers l'avant sépare les deux faces cylindriques de guidage 26, 42.

La rondelle de phasage 38A avant est appuyée axialement vers l'arrière contre cette face d'épaulement 44 pour positionner axialement les rondelles de phasage 38A, 38B par rapport aux rondelles d'entrée 20A, 20B.

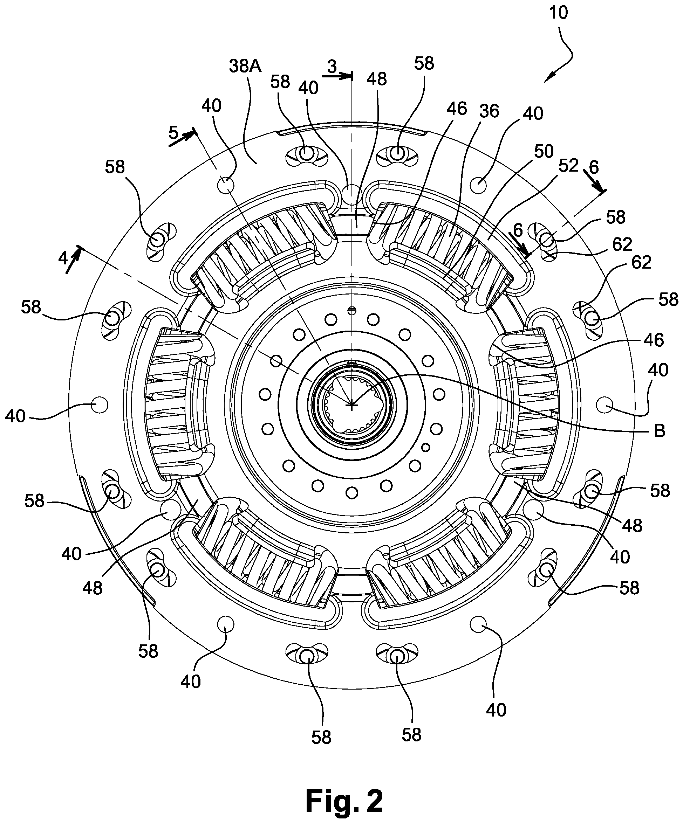

Chaque rondelle de phasage 38A, 38B est en outre ajourée de six fenêtres 46 dont chacune est agencée en coïncidence avec un organe élastique 36 associé, comme représenté aux figures 2 et 5.

Les fenêtres 46 sont séparées circonférentiellement les unes des autres par des pattes 48 radiales de phasage. Les pattes 48 de phasage sont représentées à la figure 3. Chaque patte 48 de phasage est incurvée présentent vers la rondelle d'entrée 20A, 20B associée.

Comme représenté à la figure 3, une patte 48 de phasage de chaque rondelle de phasage 38A, 38B est interposée circonférentiellement entre les deux organes élastiques 36 en série de chaque groupe.

Lors du fonctionnement du dispositif 10 d'amortissement, les organes élastiques 36 sont comprimés entre les pattes 24 de poussée des rondelles d'entrée 20A, 20B et les pattes 16 du voile 12 de sortie de manière à amortir les variations brusques de couple. Les rondelles d'entrée 20A, 20B tournent d'un angle déterminé autour de l'axe "B" par rapport au voile 12 de sortie en provoquant la compression des deux organes élastiques 36 de chaque groupe. Les pattes 48 de phasage des rondelles de phasage 38A, 38B transmettent l'effort de compression d'un organe élastique 36 vers l'autre. Du fait de cette compression, les rondelles de phasage 38A, 38B tournent de la moitié de l'angle déterminé par rapport aux rondelles d'entrée 20A, 20B.

Dans les exemples représentés aux figures 1 à 7, les rondelles de phasage 38A, 38B forment des organes de guidage pour les organes élastiques 36. A cet effet, chaque fenêtre 46 est bordée :
- radialement vers l'intérieur par une languette 50 intérieure qui s'étend depuis un bord circonférentiel intérieur de la fenêtre 46, et
- radialement vers l'extérieur par une languette 52 extérieure qui s'étend depuis un bord circonférentiel extérieur de la fenêtre 46.

Les languettes 50, 52 forment une retenue axiale pour l'organe élastique 36 associé.

Les fenêtres 46 forment ainsi des logements pour recevoir les organes élastiques 36 et pour les maintenir en position axialement et radialement.

Le dispositif 10 d'amortissement est en outre équipé de deuxièmes moyens d'amortissement de torsion du type pendulaire. De tels deuxième moyens d'amortissement comportent au moins une masselotte pendulaire 54 qui est montée oscillante dans un plan radial sur au moins une rondelle de phasage 38A, 38B.

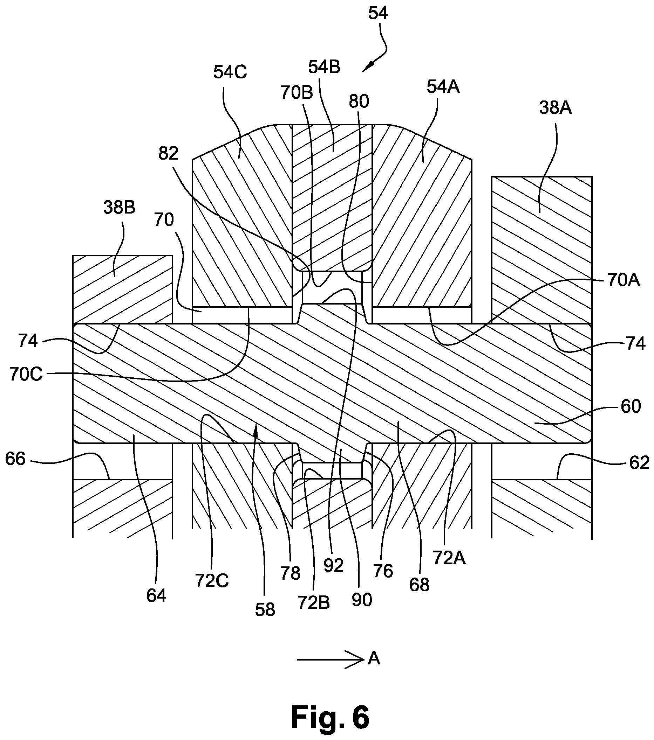

Dans l'exemple représenté à la figure 6, chaque masselotte pendulaire 54 est interposée axialement entre la rondelle de phasage 38A avant et la rondelle de phasage 38B arrière. Chaque masselotte pendulaire 54 est plus précisément agencée à la périphérie extérieure des rondelles de phasage 38A, 38B de manière à être soumise à une force centrifuge maximale lors de la rotation rapide du dispositif 10 d'amortissement.

Dans l'exemple représenté aux figures, le dispositif 10 d'amortissement présente six masselottes pendulaires 54 qui sont réparties régulièrement sur le long de la périphérie des rondelles de phasage 38A, 38B. Les masselottes pendulaires 54 sont agencées en cercle autour de la rangée circulaire d'organes élastiques 36. Ainsi, le dispositif 10 d'amortissement est équilibré.

L'écartement constant entre les deux rondelles de phasage 30A, 30B qui est assuré par les entretoises 40 est suffisant pour que la masselotte pendulaire 54 puisse osciller dans un plan radial sans frottement sur les rondelles de phasage 30A, 30B.

Certaines entretoises 40 sont agencées circonférentiellement entre deux masselottes pendulaires 54, tandis que les autres entretoises sont agencées radialement vers l'intérieur par rapport aux masselottes pendulaires 54. Ainsi, les masselottes pendulaires ne sont traversées par aucune entretoise 40.

Chaque masselotte pendulaire 54 présente une forme de bande en arc de cercle qui s'étend sur un angle d'un peu moins de 60°, de manière que le contour extérieur de chaque masselotte pendulaire 54 épouse le bord périphérique extérieur des rondelles de phasage 38A, 38B.

Les six masselottes pendulaires 54 présentent une structure identique, et elles sont montées de manière identique dans le dispositif 10 d'amortissement. Une seule masselotte pendulaire 54 sera décrite par la suite, la description étant applicable aux autres masselottes pendulaires 54.

Comme représenté à la figure 6, la masselotte pendulaire 54 est réalisée en un empilement axial de deux plaquettes radiales d'extrémité axiale 54A et 54C qui enserrent une plaquette radiale intermédiaire 54B.

Selon une variante non représentée de l'invention, la masselotte pendulaire comporte une pluralité de plaquettes intermédiaires.

Les plaquettes 54A, 54B, 54C de la masselotte pendulaire 54 sont fixées axialement entre elles par rivetage. On a représenté un tel rivet 56 axial de fixation aux figures 3 et 4.

Les déplacements de la masselotte pendulaire 54 sont guidés par deux pions 58 axiaux de guidage. Les deux pions 58 de guidage sont agencés de manière symétrique de part et d'autre d'un plan radial axial médian, correspondant au plan de coupe 4-4 de la figure 2, qui passe au milieu de la masselotte pendulaire 54.

Les deux pions 58 de guidage présentent une structure identique et ils sont montés de manière identique sur le dispositif 10 d'amortissement. Un seul pion 58 de guidage sera décrit, la description étant applicable au deuxième pion 58 de guidage.

Comme représenté à la figure 6, le tronçon d'extrémité avant 60 libre du pion 58 de guidage est logé dans un orifice 62 associé de la rondelle de phasage 38A avant, tandis que le tronçon d'extrémité arrière 64 libre du pion 58 de guidage est logé dans un orifice 66 associé de la rondelle de phasage 38B arrière. Un tronçon central 68 du pion 58 de guidage traverse un orifice 70 de passage traversant de la masselotte pendulaire 54.

L'orifice 70 de passage de la masselotte pendulaire 54 présente une forme d'une fente incurvée dont la concavité est dirigée vers l'extérieur.

L'orifice 62 de la rondelle de phasage 38A avant est identique à l'orifice 66 de la rondelle de phasage 38B arrière. L'orifice 62 de la rondelle de phasage 38A avant est agencé axialement en vis-à-vis de l'orifice 66 associé de la deuxième rondelle de phasage 38B.

L'orifice 62, 66 de chaque rondelle de phasage 38A, 38B est axialement traversant et il présente une forme de fente incurvée dont la concavité est dirigée vers l'intérieur, comme cela est représenté à la figure 2.

Les tronçons d'extrémité 60, 64 du pion 58 de guidage sont reçus avec un jeu radial dans leur orifice 62, 66 associé, et le tronçon central 68 du pion 58 de guidage est reçu avec un jeu radial dans l'orifice 70 de passage de la masselotte pendulaire 54.

L'orifice 70 de passage de la masselotte pendulaire 54 présente un bord 72 radialement intérieur qui est concave vers l'extérieur. Le pion 58 de guidage est susceptible de rouler le long de ce bord intérieur lorsque la masselotte pendulaire 54 est tirée radialement vers l'extérieur par la force centrifuge.

De même, l'orifice 62, 66 de chaque rondelle de phasage 38A, 38B présente un bord 74 radialement extérieur qui est concave vers l'intérieur. Le pion 58 de guidage est susceptible de rouler le long dudit bord 74 extérieur lorsque la masselotte pendulaire 54 est tirée radialement vers l'extérieur par la force centrifuge, comme cela est représenté à la figure 6.

Les deux tronçons d'extrémité 60, 64 du pion 58 de guidage sont constamment en appui stable sur les deux rondelles de phasage 38A, 38B. Le centre de gravité de la masselotte pendulaire 54 est ainsi constamment agencé axialement entre deux points d'appui du pion 58 de guidage sur les rondelles de phasage 38A, 38B. La masselotte pendulaire 54 n'exerce donc pas d'effort en porte-à-faux sur le pion 58 de guidage lorsqu'elle est soumise à une force centrifuge.

L'orifice 70 de passage de la masselotte pendulaire 54 traverse axialement les trois plaquettes 54A, 54B, 54C. L'orifice 70 de passage de la masselotte pendulaire 54 est donc formé par l'agencement en coïncidence d'un orifice 70A de la plaquette 54A d'extrémité avant, d'un orifice 70B de la plaquette 54B intermédiaire et d'un orifice 70C de la plaquette 54C d'extrémité arrière.

Comme représenté à la figure 6, le bord 72A, 72C radialement intérieur de l'orifice 70A, 70C de passage des deux plaquettes 54A, 54C d'extrémité axiale est décalé radialement vers l'extérieur par rapport au bord 72B radialement intérieur de la plaquette 54B intermédiaire de manière que le pion 58 de guidage soit susceptible de rouler sur le bord 72A, 72C intérieur de chacun des orifices 70A, 70C de passage des plaquettes 54A, 54C d'extrémité sans entrer en contact avec le bord 72B intérieure de l'orifice 70B de passage de la plaquette 54B intermédiaire.

Le tronçon central 68 du pion 58 de guidage est ainsi en contact avec la masselotte pendulaire 54 par deux points d'appui 72A, 72C axialement éloignés. Le centre de gravité de la masselotte pendulaire 54 est agencé axialement entre lesdits deux points d'appui sur le pion 58 de guidage. La masselotte pendulaire 54 est ainsi maintenue de manière stable dans un plan radial par rapport au pion 58 de guidage, sans basculement autour d'un axe circonférentiel, même lorsque le dispositif 10 d'amortissement tourne à grande vitesse.

Selon une variante non représentée de l'invention, lorsque la masselotte pendulaire comporte plusieurs plaquettes intermédiaires, l'orifice de passage des deux plaquettes d'extrémité axiale est décalé radialement vers l'extérieur par rapport au bord radialement intérieur de chaque plaquette intermédiaire. On peut également prévoir que les plaquettes intermédiaires adjacentes aux plaquettes d'extrémité présentent des orifices de passage identiques à ceux des plaquettes d'extrémités et présentent ainsi un bord de guidage des pions 58.

Dans le mode de réalisation représenté à la figure 6, l'orifice 70B de passage de la plaquette 54B intermédiaire présente des dimensions plus grandes que les orifices 70A, 70C de passage des plaquettes 54A, 54C d'extrémité. Plus particulièrement, le contour de l'orifice 70B de passage de la plaquette 54B intermédiaire entoure les orifices 70A, 70C de passage des plaquettes 54A, 54C d'extrémité.

Le contour de l'orifice 70B de passage de la plaquette 54B intermédiaire présente par exemple une forme homothétique par rapport au contour des orifices 70A, 70C de passage des plaquettes 54A, 54C d'extrémité.

Selon un autre aspect de l'invention, le pion 58 de guidage porte une première face de butée 76 avant et une deuxième face de butée 78 arrière qui sont destinées à venir en contact axial contre des faces de butoir 80, 82 associées de la masselotte pendulaire 54 pour limiter le déplacement du pion 58 de guidage axialement dans les deux sens par rapport à la masselotte pendulaire 54.

Ceci permet notamment d'empêcher le pion 58 de guidage de s'échapper de l'orifice 70 de passage après son montage dans la masselotte pendulaire 54.

En outre, une telle disposition des faces de butée 76, 78 présente des avantages pour la fabrication du dispositif 10 d'amortissement. En effet, le pion 58 de guidage peut être assemblé avec la masselotte pendulaire 54 préalablement à l'assemblage de la masselotte pendulaire 54 avec des rondelles de phasage 38A, 38B. Le pion 58 de guidage est alors retenu en position dans la masselotte pendulaire 54. Le module formé par la masselotte pendulaire 54 et le pion 58 de guidage peut alors ensuite être monté sur les rondelles de phasage 38A, 38B lors d'une opération ultérieure. Il n'est ainsi pas nécessaire d'assembler simultanément les pions 58 de guidage, la masselotte pendulaire 54 et les rondelles de phasage 38A, 38B en une seule opération peu aisée à mettre en oeuvre.

Dans le mode de réalisation représenté à la figure 6, les deux faces de butée 76, 78 sont portées par un collet 90 central du pion 58 de guidage. Le collet 90 est délimité axialement vers l'avant par une première face radiale formant la première face de butée 76 avant, et dans vers l'arrière par une deuxième face radiale formant la deuxième face de butée 78 arrière.

Le collet 90 présente un diamètre extérieur apte à être reçu avec un jeu radial dans l'orifice 70B de passage de la plaquette 54B intermédiaire. Le collet 90 présente en outre un diamètre qui est supérieur aux dimensions radiales de l'orifice 70A, 70C de passage de chaque plaquette 54A, 54C d'extrémité.

Le jeu radial du collet 90 dans l'orifice 70B de passage de la plaquette 54B intermédiaire est supérieur au jeu radial du pion 58 de guidage dans l'orifice 70A, 70C de passage de chaque plaquette 54A, 54C d'extrémité axiale afin d'éviter que la face cylindrique externe 92 du collet 90 ne vienne en contact avec les bords de l'orifice 70B de passage de la plaquette 54B intermédiaire.

Lors du montage de la masselotte pendulaire 54, le collet 90 du pion 58 de guidage est reçu dans l'orifice 70B de passage de la plaquette 54B intermédiaire. Puis les deux plaquettes 54A, 54C d'extrémité sont positionnées axialement de part et d'autre de la plaquette 54B intermédiaire, emprisonnant ainsi le collet 90 dans l'orifice 70B de passage de la plaquette 54B intermédiaire.

Le collet 90 présente en outre une épaisseur axiale inférieure à l'épaisseur axiale de la plaquette 54B intermédiaire de manière à éviter que le collet 90 ne soit monté serré axialement entre les deux plaquettes 54A, 54C d'extrémité. Le pion 58 de guidage demeure ainsi libre de rouler le long des fentes.

Ainsi, chacune des faces de butée 76, 78 du collet 90 est susceptible de venir en butée axiale contre une face radiale des plaquettes 54A, 54C d'extrémité pour limiter le déplacement axial du pion 58 de guidage. Plus particulièrement, la face arrière de la plaquette 54A avant forme la première face de butoir 80 contre laquelle la face de butée 76 avant est destinée à venir en contact. De même, la face avant de la plaquette 54C arrière forme la deuxième face de butoir 82 contre laquelle la face de butée 78 arrière est destinée à venir en contact.

En outre, les déplacements radiaux du pion 58 de guidage sont limités dans les deux sens par le contact entre le pion 58 de guidage et les bords de l'orifice 70A, 70C de passage de chaque plaquette 54A, 54C d'extrémité. Ainsi, le collet 90 n'est pas susceptible de venir en contact avec les bords de l'orifice 70B de passage de la plaquette 54B intermédiaire.

Dans l'exemple représenté à la figure 6, le collet 90 est réalisé venu de matière en une pièce avec le pion 58 de guidage.

Selon une variante non représentée de l'invention, le collet est formé par une bague qui est rapportée et fixée sur le pion de guidage.

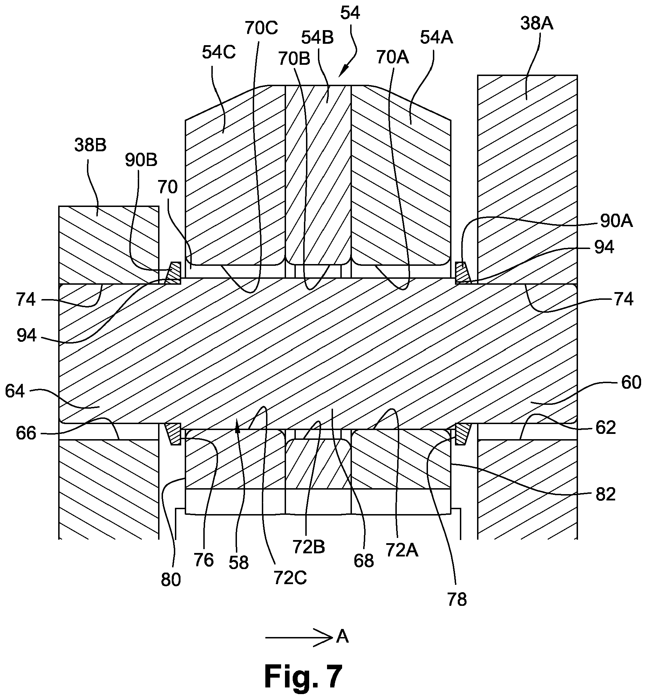

Selon une variante du premier mode de réalisation de l'invention qui est représentée à la figure 7, la face de butée 76 avant est portée par un premier collet 90B arrière, tandis que la face de butée 78 avant est portée par un deuxième collet 90A avant du pion 58 de guidage. Les deux collets 90B, 90A sont agencés axialement de part et d'autre de la masselotte pendulaire 54.

Le collet 90B arrière est destiné à venir en butée axiale contre la face arrière de la plaquette d'extrémité 54C arrière formant la première face de butoir 80. Le collet 90A avant est destiné à venir en butée axiale contre la face arrière de la plaquette d'extrémité 54A arrière avant la deuxième face de butoir 82. Le déplacement axial du pion 58 de guidage est ainsi limité dans les deux sens.

Le tronçon central 68 du pion 58 de guidage présente ici une forme cylindrique de révolution.

Dans l'exemple représenté à la figure 7, chaque collet 90B, 90A est formé par une bague associée qui est fixée au pion 58 de guidage.

Pour permettre, le positionnement de chaque bague, le tronçon central 68 du pion 58 de guidage présente avantageusement un diamètre plus grand que les tronçons d'extrémité 60, 64 du pion 58 de guidage. Ainsi, le tronçon central 68 du pion 58 de guidage est délimité axialement par deux faces d'épaulement 94. Chaque bague est susceptible d'être appuyée contre une face d'épaulement 94 pour permettre un positionnement axial précis de chaque bague par rapport à la masselotte pendulaire 54.

Selon une variante non représentée de l'invention, chaque bague est formée par un anneau élastique qui est monté dans une gorge associé du pion de guidage.

Selon une autre variante non représentée de l'invention, l'un des collets est réalisé venu de matière avec le pion de guidage, tandis que l'autre collet est formé par une bague qui est fixée sur le pion de guidage après que le pion de guidage ait été positionné dans l'orifice de passage de la masselotte pendulaire.

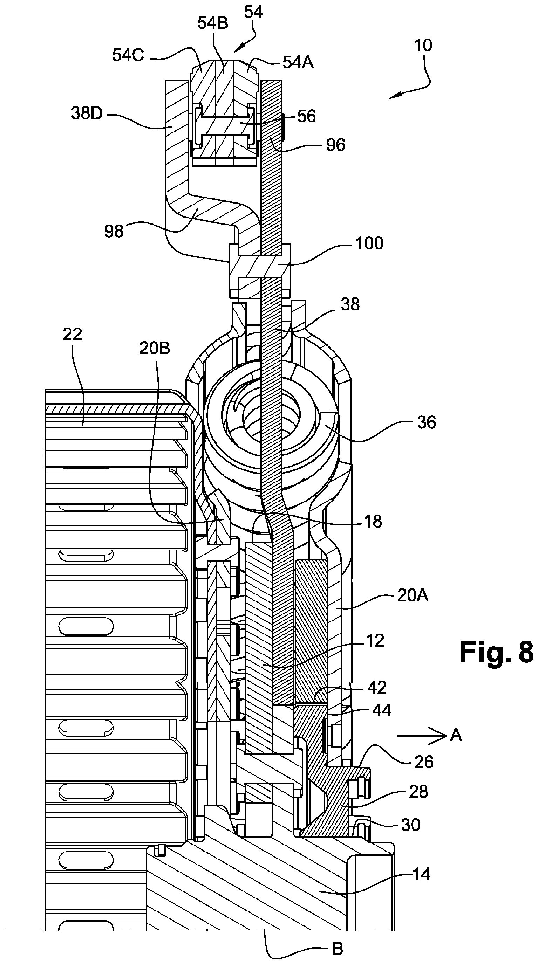

Un deuxième mode de réalisation de l'invention est représenté à la figure 8. Ce deuxième mode de réalisation peut être combiné avec les variantes de réalisation précédemment décrites. Cette variante va à présent être décrite en détails dans les paragraphes suivants.

Dans cette variante de réalisation, la position des éléments d'entrée de couple, des éléments de sortie de couple et des organes de phasage a été changé par rapport aux exemples présentés aux figures 1 à 7.

Le voile 12 de sortie est toujours positionné au axialement au centre du dispositif 10 d'amortissement. Les rondelles d'entrée 20A, 20B sont aussi agencées axialement de part et d'autre du voile 12 de sortie.

Cependant, les rondelles d'entrée 20A, 20B forment ici les organes de guidage des organes élastiques 36.

En outre, le dispositif 10 d'amortissement ne comporte qu'une unique rondelle de phasage 38 qui est agencée axialement entre le voile 12 de sortie et la rondelle d'entrée 20A avant.

La rondelle de phasage 38 comporte une bande 96 périphérique extérieur qui s'étend radialement au-delà du bord d'extrémité extérieur des rondelles d'entrée 20A, 20B. La rondelle de phasage 38 est donc équipée de fenêtres 46 qui permettent de loger les organes élastiques 36.

La bande 96 périphérique porte une plaque 38D radiale de support qui est agencée axialement en arrière. La face avant de la plaque 38D radial est agencée axialement en vis-à-vis de la face arrière de la bande 96 périphérique de la rondelle de phasage 38.

La plaque 38D présente ici une forme de bande incurvée en arc de cercle de manière à suivre la courbure de la bande 96 périphérique de la rondelle de phasage 38.

L'écart axial entre la plaque 38D et la rondelle de phasage 38 est maintenu constant, par exemple au moyen d'entretoises (non représentées).

La plaque 38D est fixée à la rondelle de phasage 38 au moyen d'au moins un bras 98 qui s'étend depuis le bord intérieur de la plaque 38D de manière à venir en contact avec la face arrière de la rondelle de phasage 38. Le bras 98 est par exemple fixé au moyen de rivets 100.

La masselotte pendulaire 54 est reçue entre la bande 96 périphérique de la rondelle de phasage 38 et la plaque 38D. La structure et le montage de la masselotte pendulaire 54 sont identiques à ce qui a été décrit précédemment. On se reportera aux paragraphes idoines de la description pour plus de détails.

L'agencement de la masselotte pendulaire 54 sur la rondelle de phasage 38 est particulièrement adapté pour un dispositif 10 d'amortissement qui est destiné à être monté dans un convertisseur hydraulique de boîte de vitesses automatique. L'agencement sur les rondelles de phasage 38A, 38B est particulièrement adapté pour des raisons d'équilibre.

L'agencement de la masselotte pendulaire 54 entre deux rondelles de phasage 38A, 38B ou une rondelle de phasage 38 et une plaque de support permet d'obtenir un maintien stable du pion 58 de guidage.

En outre, l'appui du pion 58 de guidage uniquement sur les deux plaquettes 54A, 54C d'extrémité de la masselotte pendulaire 54 permet un maintien stable de la masselotte pendulaire 54 par rapport au pion 58 de guidage.

Par ailleurs, le fait de disposer les faces de butoir 80, 82 sur la masselotte pendulaire 54 permet de simplifier le montage du dispositif 10 d'amortissement en réalisant successivement une première opération de montage des pions 58 de guidage sur la masselotte pendulaire 54, puis une deuxième opération de montage de la masselotte pendulaire 54 ainsi munie des pions 58 de guidage entre les plaques de support. Ces deux opérations de montage sont particulièrement simples à mettre en oeuvre.

## Revendications

1. Dispositif (10) d'amortissement de torsion entre un arbre moteur et un arbre mené dans un système d'accouplement temporaire de véhicule automobile, le dispositif (10) étant équipé de premiers moyens d'amortissement de torsion qui comportent :
- un élément (12) d'entrée de couple et un élément (20A, 20B) de sortie de couple ;
- au moins deux organes élastiques (36) à action circonférentielle qui sont interposés circonférentiellement en série entre l'élément d'entrée (12) et l'élément de sortie (20A, 20B) ;
- au moins une première rondelle radiale de phasage (38, 38A) qui est libre en rotation par rapport à l'élément (12) d'entrée et par rapport à l'élément (20A, 20B) de sortie, la rondelle de phasage (38, 38A) comportant au moins une patte (48) radiale de phasage qui est interposée circonférentiellement entre les deux organes élastiques (36) en série ;
le dispositif d'amortissement étant équipé de deuxièmes moyens d'amortissement de torsion qui comportent :
- au moins deux masselottes pendulaires (54) qui sont montées oscillantes dans un plan radial sur la première rondelle de phasage (38, 38A) ;
- au moins un pion axial de guidage (58) pour guider chaque masselotte pendulaire (54), le pion de guidage (58) étant logé en partie dans un orifice (70) de la masselotte pendulaire (54) et en partie dans un orifice (62) de la première rondelle de phasage (38, 38A) ;
- l'orifice (70) de la masselotte pendulaire (54) présente un bord (72) radialement intérieur le long duquel le pion de guidage (58) est susceptible de rouler ;
**caractérisé en ce que** les masselottes pendulaires (54) sont interposées axialement entre la première rondelle de phasage (38, 38A) et une deuxième plaque (38B, 38D) radiale de support qui est fixe par rapport à la rondelle de phasage (38, 38A), et **en ce que** les pions de guidage (58) sont logés en partie dans un orifice (66) de la deuxième plaque (38B, 38D).

2. Dispositif (10) selon la revendication précédente, **caractérisé en ce que** les premiers moyens d'amortissement de torsion comportent une deuxième rondelle radiale de phasage (38B) qui est agencée parallèlement à la première rondelle de phasage (38A), et **en ce que** la deuxième rondelle de phasage (38B) forme ladite deuxième plaque de support.

3. Dispositif (10) selon l'une quelconque des revendications précédentes, **caractérisé en ce que** les masselottes pendulaires (54) sont formées par deux plaquettes (54A, 54C) d'extrémité axiale qui enserrent au moins une plaquette (54B) intermédiaire.

4. Dispositif (10) selon la revendication précédente, **caractérisé en ce que** le bord (72A, 72C) radialement intérieur de l'orifice (70A, 70C) de passage des deux plaquettes (54A, 54C) d'extrémité axiale est décalé radialement vers l'extérieur par rapport au bord (72B) radialement intérieur de l'orifice (70B) de passage de la plaquette (54B) intermédiaire de manière que les pions de guidage (58) soient susceptibles de rouler uniquement sur le bord (72A, 72C) intérieur de l'orifice (70A, 70C) des plaquettes (54A, 54C) d'extrémité sans entrer en contact avec le bord (72B) intérieur de l'orifice (70B) de passage de la plaquette (54B) intermédiaire.

5. Dispositif (10) selon la revendication précédente, **caractérisé en ce que** les pions de guidage (58) portent une première face de butée (76) et une deuxième face de butée (78) qui sont destinées à venir en contact axial contre des faces de butoir (80, 82) associées qui sont portées par les masselottes pendulaires (54) pour limiter les déplacements axiaux des pions de guidage (58) dans les deux sens par rapport aux masselottes pendulaires (54).

6. Dispositif (10) selon la revendication précédente, **caractérisé en ce que** les deux faces de butée (76, 78) sont formées par des faces radiales opposées d'un collet (90) central du pion de guidage (58), le collet (90) étant agencé entre les deux plaquettes (54A, 54C) d'extrémité, une face radiale de chaque plaquette (54A, 54C) d'extrémité formant ladite face de butoir (80, 82).

7. Dispositif (10) selon la revendication précédente, **caractérisé en ce que** le collet (90) est réalisé venu de matière en une pièce avec les pions de guidage (58).

8. Dispositif (10) selon la revendication 6, **caractérisé en ce que** le collet (90) est formé par une bague qui est fixée sur les pions de guidage (58).

9. Dispositif (10) selon la revendication 5, **caractérisé en ce que** chaque face de butée (76, 78) est portée par un collet (90A, 90B) associé des pions de guidage (58), les deux collets (90A, 90B) étant agencés axialement de part et d'autre des masselottes pendulaires (54), chaque collet (90A, 90B) étant destiné à venir en butée axiale contre une plaquette d'extrémité (54A, 54C) associée des masselottes pendulaires (54) pour limiter les déplacements axiaux des pions de guidage (58).

10. Dispositif (10) selon la revendication précédente, **caractérisé en ce qu'**au moins l'un des collets (90A, 90B) est formé par une bague qui est fixée sur les pions de guidage (58).

11. Dispositif (10) selon la revendication précédente, **caractérisé en ce que** l'un des collets (90A, 90B) est réalisé venu de matière avec les pions de guidage (58).

12. Dispositif (10) selon l'une quelconque des revendications 3 à 11, **caractérisé en ce que** les plaquettes (54A, 54B, 54C) des masselottes pendulaires (54) sont fixées axialement entre elles par des rivets (56).

13. Dispositif (10) selon l'une quelconque des revendications précédentes, **caractérisé en ce que** l'écart axial entre la rondelle de phasage (38, 38A) et la plaque de support (38B, 38D) en vis-à-vis est maintenu constant au moyen d'au moins une entretoise (40).

14. Dispositif (10) selon l'une quelconque des revendications 2 à 13, **caractérisé en ce que** les deux rondelles de phasage (38A, 38B) forment des organes de guidage qui sont susceptibles d'emprisonner axialement les organes élastiques (36).

## Patentansprüche

1. Torsionsdämpfungsvorrichtung (10) zwischen einer Antriebswelle und einer Abtriebswelle in einem zeitweiligen Kupplungssystem eines Kraftfahrzeugs, wobei die Vorrichtung (10) mit ersten Torsionsdämpfungsmitteln ausgestattet ist, umfassend:
- ein Drehmomenteingangselement (12) und ein Drehmomentausgangselement (20A, 20B);
- mindestens zwei elastische Elemente (36) mit Umfangswirkung, die in Umfangsrichtung in Serie zwischen dem Eingangselement (12) und dem Ausgangselement (20A, 20B) zwischengefügt sind;
- mindestens eine erste radiale Phasenscheibe (38, 38A), die in Bezug zum Eingangselement (12) und in Bezug zum Ausgangselement (20A, 20B) frei drehbar ist, wobei die Phasenscheibe (38, 38A) mindestens eine radiale Phasenklaue (48) umfasst, die in Umfangsrichtung zwischen den zwei in Serie angeordneten elastischen Elementen (36) zwischengefügt ist;
wobei die Dämpfungsvorrichtung mit zweiten Torsionsdämpfungsmitteln ausgestattet ist, umfassend:
- mindestens zwei Pendelgewichte (54), die schwingend in einer Radialebene auf der ersten Phasenscheibe (38, 38A) montiert sind;
- mindestens einen axialen Führungsstift (58), um jedes Pendelgewicht (54) zu führen, wobei der Führungsstift (58) teilweise in einer Öffnung (70) des Pendelgewichts (54) und teilweise in einer Öffnung (62) der ersten Phasenscheibe (38, 38A) angeordnet ist;
- wobei die Öffnung (70) des Pendelgewichts (54) einen radial inneren Rand (72) aufweist, entlang dessen der Führungsstift (58) rollen kann;
**dadurch gekennzeichnet, dass** die Pendelgewichte (54) axial zwischen der ersten Phasenscheibe (38, 38A) und einer zweiten radialen Stützplatte (38B, 38D), die in Bezug zur Phasenscheibe (38, 38A) fest ist, zwischengefügt sind, und dass die Führungsstifte (58) teilweise in einer Öffnung (66) der zweiten Platte (38B, 38D) angeordnet sind.

2. Vorrichtung (10) nach dem vorhergehenden Anspruch, **dadurch gekennzeichnet, dass** die ersten Torsionsdämpfungsmittel eine zweite radiale Phasenscheibe (38B) umfassen, die parallel zur ersten Phasenscheibe (38A) angeordnet ist, und dass die zweite Phasenscheibe (38B) die zweite Stützplatte bildet.

3. Vorrichtung (10) nach einem der vorhergehenden Ansprüche, **dadurch gekennzeichnet, dass** die Pendelgewichte (54) von zwei Axialendplatten (54A, 54C) gebildet sind, die mindestens eine Zwischenplatte (54B) einspannen.

4. Vorrichtung (10) nach dem vorhergehenden Anspruch, **dadurch gekennzeichnet, dass** der radial innere Rand (72A, 72C) der Durchgangsöffnung (70A, 70C) der zwei Axialendplatten (54A, 54C) radial nach außen in Bezug zum radial inneren Rand (72B) der Durchgangsöffnung (70B) der Zwischenplatte (54B) versetzt ist, so dass die Führungsstifte (58) geeignet sind, nur auf dem Innenrand (72A, 72C) der Öffnung (70A, 70C) der Endplatten (54A, 54C) zu rollen, ohne mit dem Innenrand (72B) der Durchgangsöffnung (70B) der Zwischenplatte (54B) in Kontakt zu kommen.

5. Vorrichtung (10) nach dem vorhergehenden Anspruch, **dadurch gekennzeichnet, dass** die Führungsstifte (58) eine erste Anschlagfläche (76) und eine zweite Anschlagfläche (78) tragen, die dazu bestimmt sind, mit zugehörigen Anschlagflächen (80, 82), die von den Pendelgewichten (54) getragen werden, in Axialkontakt zu kommen, um die Axialverlagerungen der Führungsstifte (58) in beide Richtungen in Bezug zu den Pendelgewichten (54) zu begrenzen.

6. Vorrichtung (10) nach dem vorhergehenden Anspruch, **dadurch gekennzeichnet, dass** die zwei Anschlagflächen (76, 78) von radial gegenüberliegenden Seiten einer zentralen Manschette (90) des Führungsstifts (58) gebildet sind, wobei die Manschette (90) zwischen den zwei Endplatten (54A, 54C) angeordnet ist, wobei eine radiale Fläche jeder Endplatte (54A, 54C) die Anschlagfläche (80, 82) bildet.

7. Vorrichtung (10) nach dem vorhergehenden Anspruch, **dadurch gekennzeichnet, dass** die Manschette (90) aus einem Stück mit den Führungsstiften (58) ist.

8. Vorrichtung (10) nach Anspruch 6, **dadurch gekennzeichnet, dass** die Manschette (90) von einem Ring gebildet ist, der auf den Führungsstiften (58) befestigt ist.

9. Vorrichtung (10) nach Anspruch 5, **dadurch gekennzeichnet, dass** jede Anschlagfläche (76, 78) von einer zugehörigen Manschette (90A, 90B) er Führungsstifte (58) gebildet ist, wobei die zwei Manschetten (90A, 90B) axial beiderseits der Pendelgewichte (54) angeordnet sind, wobei jede Manschette (90A, 90B) dazu bestimmt ist, an einer zugehörigen Endplatte (54A, 54C) der Pendelgewichte (54) axial zum Anschlag zu gelangen, um die Axialverlagerungen der Führungsstifte (58) zu begrenzen.

10. Vorrichtung (10) nach dem vorhergehenden Anspruch, **dadurch gekennzeichnet, dass** mindestens eine der Manschetten (90A, 90B) von einem Ring gebildet ist, der auf den Führungsstiften (58) befestigt ist.

11. Vorrichtung (10) nach dem vorhergehenden Anspruch, **dadurch gekennzeichnet, dass** eine der Manschetten (90A, 90B) aus einem Stück mit den Führungsstiften (58) hergestellt ist.

12. Vorrichtung (10) nach einem der Ansprüche 3 bis 11, **dadurch gekennzeichnet, dass** die Platten (54A, 54B, 54C) der Pendelgewichte (54) axial untereinander durch Nieten (56) befestigt sind.

13. Vorrichtung (10) nach einem der vorhergehenden Ansprüche, **dadurch gekennzeichnet, dass** der Axialabstand zwischen der Phasenscheibe (38, 38A) und der gegenüberliegenden Stützplatte (38B, 38D) mit Hilfe mindestens einer Querstrebe (40) konstant gehalten wird.

14. Vorrichtung (10) nach einem der Ansprüche 2 bis 13, **dadurch gekennzeichnet, dass** die zwei Phasenscheiben (38A, 38B) Führungselemente bilden, die geeignet sind, die elastischen Elemente (36) axial einzuschließen.

## Claims

1. Device (10) for damping torsion between a driveshaft and a driven shaft in a motor vehicle temporary coupling system, the device (10) being equipped with first torsion damping means which comprise:
- a torque input element (12) and a torque output element (20A, 20B);
- at least two circumferentially acting elastic members (36) which are interposed circumferentially in series between the input element (12) and the output element (20A, 20B);
- at least one first radial phase washer (38, 38A) which is free to rotate with respect to the input element (12) and with respect to the output element (20A, 20B), the phase washer (38, 38A) comprising at least one radial phase lug (48) which is interposed circumferentially between the two elastic members (36) in series;
the damping device being equipped with second torsion damping means which comprise:
- at least two pendular flyweights (54) which are mounted with the ability to oscillate in a radial plane on the first phase washer (38, 38A);
- at least one axial guide pin (58) for guiding each pendular flyweight (54), the guide pin (58) being housed partially in an orifice (70) of the pendular flyweight (58) and partially in an orifice (62) of the first phase washer (38, 38A);
- the orifice (70) of the pendular flyweight (54) has a radially interior edge (72) along which the guide pin (58) is able to run;
**characterized in that** the pendular flyweights (54) are interposed axially between the first phase washer (38, 38A) and a second radial support plate (38B, 38D) which is fixed with respect to the phase washer (38, 38A), and **in that** the guide pins (58) are housed partially in an orifice (66) of the second plate (38B, 38D).

2. Device (10) according to the preceding claim, **characterized in that** the first torsion damping means comprise a second radial phase washer (38B) which is arranged parallel to the first phase washer (38A), and **in that** the second phase washer (38B) forms the said second support plate.

3. Device (10) according to either one of the preceding claims, **characterized in that** the pendular flyweights (54) are formed by two axial end plates (54A, 54C) which flank at least one intermediate plate (54B) .

4. Device (10) according to the preceding claim, **characterized in that** the radially interior edge (72A, 72C) of the passage orifice (70A, 70C) of the two axial end plates (54A, 54C) is offset radially towards the outside with respect to the radially interior edge (72B) of the passage orifice (70B) of the intermediate plate (54B) so that the guide pins (58) are able to run only on the interior edge (72A, 72C) of the orifice (70A, 70C) of the end plates (54A, 54C) without coming into contact with the interior edge (72B) of the passage orifice (70B) of the intermediate plate (54B).

5. Device (10) according to the preceding claim, **characterized in that** the guide pins (58) have a first abutment face (76) and a second abutment face (78) which are intended to come into axial contact with associated buffer faces (80, 82) borne by the pendular flyweights (54) so as to limit the axial movements of the guide pins (58) in both directions with respect to the pendular flyweights (54).

6. Device (10) according to the preceding claim, **characterized in that** the two abutment faces (76, 78) are formed by opposite radial faces of a central collar (90) of the guide pin (58), the collar (90) being positioned between the two end plates (54A, 54C), a radial face of each end plate (54A, 54C) forming the said buffer face (80, 82).

7. Device (10) according to the preceding claim, **characterized in that** the collar (90) is formed as one piece with the guide pins (58).

8. Device (10) according to Claim 6, **characterized in that** the collar (90) is formed by a ring which is fixed to the guide pins (58).

9. Device (10) according to Claim 5, **characterized in that** each abutment face (76, 78) is borne by an associated collar (90A, 90B) of the guide pins (58), the two collars (90A, 90B) being arranged axially on either side of the pendular flyweights (54), each collar (90A, 90B) being intended to come into abutment axially against an associated end plate (54A, 54C) of the pendular flyweights (54) to limit the axial movements of the guide pins (58).

10. Device (10) according to the preceding claim, **characterized in that** at least one of the collars (90A, 90B) is formed by a ring which is fixed to the guide pins (58).

11. Device (10) according to the preceding claim, **characterized in that** one of the collars (90A, 90B) is formed as an integral part of the guide pins (58).

12. Device (10) according to any one of Claims 3 to 11, **characterized in that** the plates (54A, 54B, 54C) of the pendular flyweights (54) are fixed together axially by rivets (56).

13. Device (10) according to any one of the preceding claims, **characterized in that** the axial separation between the phase washer (38, 38A) and the support plate (38B, 38D) opposite is kept constant by means of at least one spacer (40).

14. Device (10) according to any one of Claims 2 to 13, **characterized in that** the two phase washers (38A, 38B) form guide members which are capable of axially trapping the elastic members (36).
